# EUROPEAN PATENT APPLICATION

(11) **EP 4 629 389 A1**
(43) Date of publication of application: **08.10.2025**
(21) Application number: 23912668.3
(22) Date of filing: 12.12.2023
(51) Int. Cl.: H01M 10/0569, H01M 10/0567, H01M 10/42, H01M 10/0568, H01M 10/052, H01M 10/058, H01M 50/40

(54) **ELECTROLYTE FOR LITHIUM SECONDARY BATTERY AND LITHIUM SECONDARY BATTERY COMPRISING SAME**

(30) Priority: 28.12.2022 KR 20220187865
(71) Applicant: SK On Co., Ltd., Seoul 03161 (KR)
(72) Inventor: PARK, Seong Jin, Daejeon 34124 (KR); PARK, Myung Soo, Daejeon 34124 (KR)
(74) Representative: Prüfer & Partner mbB Patentanwälte · Rechtsanwälte
(86) International application number: PCT/KR2023/020391
(87) International publication number: WO 2024/143993

(57) **Abstract**

An electrolyte for a lithium secondary battery of the embodiments of the present disclosure includes a solvent including a fluorine-based solvent; a phosphorus-based flame retardant additive, wherein the fluorine-based solvent is included in an amount of 50 vol% or more based on the total volume of the solvent, and the fluorine-based solvent includes a fluorine-containing cyclic carbonate and a fluorine-containing linear asymmetric carbonate. Accordingly, the flame retardancy and cycle life characteristics of a lithium secondary battery including the electrolyte may be improved.

## Description

### [Technical Field]

The present disclosure relates to an electrolyte for a lithium secondary battery and a lithium secondary battery including the same. More specifically, the present disclosure relates to an electrolyte for a lithium secondary battery, which includes different types of components, and a lithium secondary battery including the electrolyte.

### [Background Art]

A secondary battery is a battery that can be repeatedly charged and discharged. With the rapid progress of information and communication technology and display industries, the secondary battery has been widely applied to various portable electronic telecommunication devices such as a camcorder, a mobile phone, a laptop computer, etc. as their power sources. Recently, a battery pack including the secondary battery has also been developed and applied to eco-friendly automobiles such as an electric vehicle, a hybrid vehicle, etc., as their power sources.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and lightweight design. In this regard, the lithium secondary battery has been actively developed and applied to various industrial fields.

For example, the lithium secondary battery may include: an electrode assembly including a cathode, an anode, and a separation membrane (separator); and an electrolyte in which the electrode assembly is impregnated. The lithium secondary battery may further include, for example, a pouch-type outer case in which the electrode assembly and the electrolyte are housed.

When lithium metal is used as the anode, lithium may be unevenly deposited during charging of a lithium secondary battery, which may cause the growth of dendrites (crystal structures resembling tree branches). If the dendrites penetrate the separation membrane and come into contact with the cathode, a short circuit may occur in the lithium secondary battery. Accordingly, the battery cycle life and stability may deteriorate, and a fire may occur due to the heat generated upon the occurrence of the short circuit.

For example, Korean Patent No. 10-2400731 discloses an electrolyte having a specific composition that suppresses the growth of dendrites and prevents short circuiting, but does not disclose an electrolyte that improves both the cycle life characteristics and flame retardancy of the lithium secondary battery.

### [Summary of Invention]

### [Problems to be Solved by Invention]

An object of the present disclosure is to provide an electrolyte capable of imparting excellent flame retardancy and cycle life characteristics to a lithium secondary battery.

Another object of the present disclosure is to provide a lithium secondary battery including the electrolyte and exhibiting excellent flame retardancy and cycle life characteristics.

### [Means for Solving Problems]

An electrolyte for a lithium secondary battery according to exemplary embodiments includes: a solvent including a fluorine-based solvent; and a phosphorus-based flame retardant additive, wherein the fluorine-based solvent is included in an amount of 50% by volume or more based on the total volume of the solvent, and wherein the fluorine-based solvent includes a fluorine-containing cyclic carbonate and a fluorine-containing linear asymmetric carbonate.

In some embodiments, the phosphorus-based flame retardant additive may include cyclotriphosphazene having a structure represented by Formula 1 below:

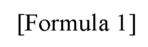

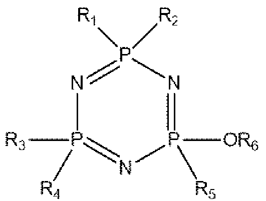

In Formula 1, R₁ to R₅ may each independently be a halogen atom, and R₆ may be an alkyl group having 1 to 10 carbon atoms.

In some embodiments, R₁ to R₅ may be fluorine atoms, and R₆ may be an ethyl group.

In some embodiments, the fluorine-containing linear asymmetric carbonate may have a non-polymerizable terminal group.

In some embodiments, the fluorine-containing cyclic carbonate may have a structure represented by Formula 2 below:

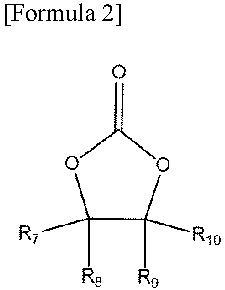

In Formula 2, R₇ to R₁₀ may each independently be a hydrogen atom or a fluorine atom, and at least one of R₇ to R₁₀ may be a fluorine atom.

In some embodiments, the fluorine-containing linear asymmetric carbonate may have a structure represented by Formula 3 below:

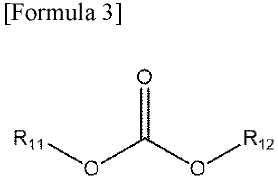

In Formula 3, R₁₁ may be a fluorine-free alkyl group having 1 to 5 carbon atoms, and R₁₂ may be an alkyl group having 1 to 5 carbon atoms in which at least one hydrogen atom may be replaced with a fluorine atom.

In some embodiments, a content of the fluorine-based solvent may be 70% by weight or more based on a total weight of the electrolyte.

In some embodiments, the fluorine-containing cyclic carbonate and the fluorine-containing linear asymmetric carbonate may be included in a volume ratio of 1:9 to 8:2.

In some embodiments, the electrolyte may further include a lithium salt.

In some embodiments, the lithium salt may include at least one selected from the group consisting of LiPF₆, LiClO₄, LiBF₄, LiFSI, LiTFSI, LiSO₃CF₃, LiBOB, LiFOB, LiDFOB, LiDFBP, LiTFOP, LiPO₂F₂, LiCl, LiBr, LiI, LiB₁₀Cl₁₀, LiCF₃SO₃, LiCF₃CO₂, LiAsF₆, LiSbF₆, LiAlCl₄, CH₃SO₃Li, CF₃SO₃Li, LiSCN and LiC(CF₃SO₂)₃.

In some embodiments, a content of the phosphorus-based flame retardant additive may be 3 to 10% by weight based on the total weight of the electrolyte.

In some embodiments, the fluorine content may be 30% by weight or more and the phosphorus content may be 1.8% by weight or more.

In some embodiments, the oxygen content may be 32.5% by weight or less.

A lithium secondary battery according to exemplary embodiments includes: a case; an electrode assembly including a cathode and an anode housed in the case; and the above-described electrolyte for a lithium secondary battery injected into the case.

In some embodiments, the anode may include metal lithium.

In some embodiments, the electrode assembly may further include a separation membrane interposed between the cathode and the anode.

### [Advantageous effects]

According to exemplary embodiments of the present disclosure, the electrolyte for a lithium secondary battery may include a solvent including a fluorine-based solvent having a specific composition and a phosphorus-based flame retardant additive. Accordingly, the flame retardancy and cycle life characteristics of a lithium secondary battery including the electrolyte may be improved.

### [Brief Description of Drawings]

FIGS. 1 and 2 are schematic plan and cross-sectional views illustrating a lithium secondary battery according to exemplary embodiments, respectively.
FIG. 3 is photographs illustrating the results of evaluating the flame retardancy of electrolytes prepared according to Example 1, and Comparative Examples 1 and 2.
FIGS. 4A, 4B and 4C are photographs illustrating the results of evaluating the electrodeposition shapes of lithium secondary batteries manufactured according to Example 1, and Comparative Examples 1 and 2, respectively, wherein (A) in FIG. 4B illustrates electrodeposited lithium, and (B) in FIG. 4B illustrates a copper foil.
FIG. 5 is a graph illustrating the capacity retention rates according to repeated charging and discharging of the lithium secondary batteries manufactured according to Example 1, and Comparative Examples 1 and 2.

### [Mode for Carrying out Invention]

Exemplary embodiments of the present disclosure provide an electrolyte for a lithium secondary battery, which includes: a solvent including a fluorine-based solvent; and a phosphorus-based flame retardant additive, wherein the fluorine-based solvent is included in an amount of 50% by volume ("vol%") or more based on the total volume of the solvent, and the fluorine-based solvent includes a fluorine-containing cyclic carbonate and a fluorine-containing linear asymmetric carbonate.

In addition, exemplary embodiments of the present disclosure provide a lithium secondary battery including the electrolyte for a lithium secondary battery.

Therefore, the flame retardancy and cycle life characteristics of the lithium secondary battery may be improved.

Hereinafter, embodiments of the present disclosure will be described in more detail. However, the following drawings attached to the present specification illustrate embodiments of the present disclosure, and serve to further understand the technical spirit of the present disclosure together with the above-described contents of the invention, such that the present disclosure should not be construed as being limited only to the illustrations of the drawings.

### <Electrolyte for a lithium secondary battery>

The electrolyte for a lithium secondary battery (hereinafter, also be abbreviated as the electrolyte) according to exemplary embodiments may include a solvent including a fluorine-based solvent and a phosphorus-based flame retardant additive, wherein the fluorine-based solvent is included in an amount of 50 vol% or more based on the total volume of the solvent, and the fluorine-based solvent may include a fluorine-containing cyclic carbonate and a fluorine-containing linear asymmetric carbonate.

The electrolyte for a lithium secondary battery according to exemplary embodiments may include a phosphorus-containing compound or a fluorine-containing compound.

When a lithium secondary battery undergoes combustion, highly active H radicals and OH radicals may be generated, and such radicals may induce a chain combustion reaction. Without being bound by any particular theory, the phosphorus-containing compound included in the electrolyte for a lithium secondary battery according to exemplary embodiments may exhibit a combustion-blocking ability that blocks a chain combustion reaction by releasing P radicals to capture the H and OH radicals. In addition, the phosphorus-containing compound may have a high dielectric constant, thereby facilitating the dissolution of lithium salts such as LiNO₃.

Without being bound by any particular theory, the fluorine-containing compound included in the electrolyte for a lithium secondary battery according to exemplary embodiments may form a solid electrolyte interphase (SEI) having a large number of LiF particles on the electrode surface, thereby suppressing side reactions between the electrode and the electrolyte. In addition, the formation of dendrites that cause a short circuit in the lithium metal battery may also be suppressed.

In the electrolyte for a lithium secondary battery according to exemplary embodiments, the phosphorus-containing compound may be a phosphorus-based flame retardant additive, and the fluorine-containing compound may be a fluorine-based solvent. Therefore, the electrolyte including the fluorine-based solvent having a specific composition and the phosphorus-based flame retardant additive may be used to provide a lithium secondary battery with improved flame retardancy, cycle life, and capacity retention rate.

In some embodiments, the phosphorus-based flame retardant additive may include a cyclotriphosphazene having a structure represented by Formula 1 below.

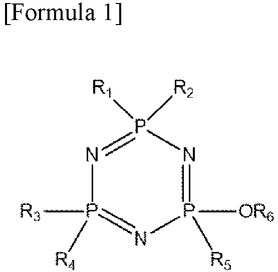

In Formula 1, R₁ to R₅ may each independently be a halogen atom, and R₆ may be an alkyl group having 1 to 10 carbon atoms.

For example, R₁ to R₅ may each independently be a halogen atom, a fluorine atom, or a chlorine atom.

For example, R₆ may be an alkyl group having 1 to 10 carbon atoms, an alkyl group having 1 to 8 carbon atoms, an alkyl group having 1 to 5 carbon atoms, or an alkyl group having 1 to 3 carbon atoms.

In some embodiments, R₁ to R₅ may each be a fluorine atom, and R₆ may be an ethyl group.

Accordingly, since the phosphorus-based flame retardant additive contains a large number of fluorine atoms, the electrolyte may form a solid electrolyte interphase (SEI) and suppress dendrite formation. Therefore, the flame retardancy, cycle life and capacity retention rate of the lithium secondary battery may be improved.

In some embodiments, the solvent may include a fluorine-based solvent. For example, the fluorine-based solvent may include a fluorine-containing cyclic carbonate and a fluorine-containing linear asymmetric carbonate. For example, the solvent may further include a solvent other than the fluorine-based solvent. Here, the solvent other than the fluorine-based solvent may refer to a solvent that does not contain fluorine, and may include, for example, a carbonate-based solvent, an ester-based solvent, an ether-based solvent, a ketone-based solvent, an alcohol-based solvent, an aprotic solvent, etc., which does not contain fluorine.

In some embodiments, the fluorine-containing cyclic carbonate may have a structure represented by Formula 2 below.

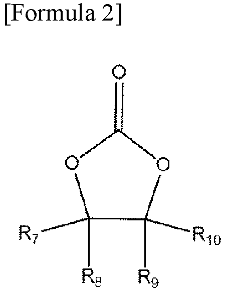

In Formula 2, R₇ to R₁₀ may each independently be a hydrogen atom or a fluorine atom, and at least one of R₇ to R₁₀ may be a fluorine atom.

For example, any one of R₇ to R₁₀ may be a fluorine atom, any two of R₇ to R₁₀ may be a fluorine atom, any three of R₇ to R₁₀ may be a fluorine atom, and all of R₇ to R₁₀ may be fluorine atoms.

In some embodiments, the fluorine-containing cyclic carbonate may include at least one selected from the group consisting of fluoroethylene carbonate (FEC), difluoroethylene carbonate (DFEC) and trifluoroethylene carbonate (TFEC).

In one embodiment, the fluorine-containing cyclic carbonate may include fluoroethylene carbonate (FEC).

In some embodiments, the fluorine-containing linear asymmetric carbonate may have a structure represented by Formula 3 below.

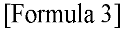

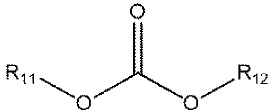

In Formula 3, R₁₁ may be a fluorine-free alkyl group having 1 to 5 carbon atoms, and R₁₂ may be an alkyl group having 1 to 5 carbon atoms in which at least one hydrogen atom is replaced with a fluorine atom.

For example, R₁₁ may be a fluorine-free alkyl group having 1 to 5 carbon atoms, a fluorine-free alkyl group having 1 to 4 carbon atoms, a fluorine-free alkyl group having 1 to 3 carbon atoms, a fluorine-free methyl group or ethyl group, or a fluorine-free methyl group.

For example, R₁₂ may be an alkyl group having 1 to 5 carbon atoms in which at least one hydrogen atom is replaced with a fluorine atom, an alkyl group having 1 to 4 carbon atoms in which at least one hydrogen atom is replaced with a fluorine atom, an alkyl group having 1 to 3 carbon atoms in which at least one hydrogen atom is replaced with a fluorine atom, a methyl group or an ethyl group in which at least one hydrogen atom is replaced with a fluorine atom, or a methyl group in which at least one hydrogen atom is replaced with a fluorine atom. Here, R₁₂ may be a perfluorinated alkyl group in which all hydrogen atoms are replaced with fluorine atoms.

In some embodiments, the fluorine-containing linear asymmetric carbonate may include at least one selected from the group consisting of fluorodimethyl carbonate (FDMC), fluorodiethyl carbonate (FDEC), and fluoroethylmethyl carbonate (FEMC).

The FDMC may refer to fluoromethyl methyl carbonate, the FDEC may refer to 2,2,2-trifluoroethyl carbonate, and the FEMC may refer to methyl (2,2,2-trifluoroethyl) carbonate (MTFEC).

In one embodiment, the fluorine-containing linear asymmetric carbonate may include fluoroethyl methyl carbonate (FEMC).

In some embodiments, the fluorine-based solvent may be included in an amount of 50 vol% or more based on the total volume of the solvent. For example, the content of the fluorine-based solvent may be 50 vol% or more, 60 vol% or more, 70 vol% or more, 80 vol% or more, or 90 vol% or more based on the total volume of the solvent.

If the content of the fluorine-based solvent is less than 50 vol% based on the total volume of the solvent, the SEI layer may be insufficiently formed, thereby causing side reactions between the electrode and electrolyte, and dendrite growth may not be suppressed, resulting in a short circuit. Therefore, the flame retardancy and cycle life characteristics of the lithium secondary battery may deteriorate.

In some embodiments, the fluorine-based solvent may include the fluorine-containing cyclic carbonate and the fluorine-containing linear asymmetric carbonate in a volume ratio of 1:9 to 8:2. Within the above range, the electrolyte may form a stable electrode-electrolyte interface, and suppress the growth of dendrites, and if the volume ratio is out of the above range, the cycle life characteristics of the lithium secondary battery may deteriorate.

In some embodiments, the fluorine-containing linear asymmetric carbonate may have a non-polymerizable terminal group. Accordingly, the electrolyte may exhibit more improved solubility for the lithium salt and the phosphorus-based flame retardant additive.

In some embodiments, a content of the fluorine-based solvent may be 70% by weight ("wt%") or more based on the total weight of the electrolyte. For example, the content of the fluorine-based solvent may be 70 to 95 wt%, 75 to 90 wt%, or 80 to 85 wt%.

Within the above range, the content of fluorine atoms included in the electrolyte may be appropriately adjusted, thereby allowing an SEI layer to be sufficiently formed on the surface of the lithium metal electrode and further suppressing the formation of dendrites. Accordingly, the flame retardancy and cycle life of the lithium secondary battery may be further improved.

In some embodiments, the electrolyte may further include a lithium salt.

In some embodiments, the lithium salt may include at least one selected from the group consisting of LiPF₆, LiClO₄, LiBF₄, LiFSI, LiTFSI, LiSO₃CF₃, LiBOB, LiFOB, LiDFOB, LiDFBP, LiTFOP, LiPO₂F₂, LiCl, LiBr, LiI, LiB₁₀Cl₁₀, LiCF₃SO₃, LiCF₃CO₂, LiAsF₆, LiSbF₆, LiAlCl₄, CH₃SO₃Li, CF₃SO₃Li, LiSCN and LiC(CF₃SO₂)₃.

In one embodiment, the lithium salt may include LiPF₆.

A concentration of the lithium salt dissolved in the solvent may be 0.5 M to 3 M. For example, the concentration of the lithium salt may be 0.5 M to 3 M, 0.8 M to 1.5 M, or 0.8 M to 1.2 M. Within the above range, the migration of lithium ions and/or electrons may be further facilitated.

In some embodiments, a content of the phosphorus-based flame retardant additive may be 3 to 10 wt% based on the total weight of the electrolyte. For example, the content of the phosphorus-based flame retardant additive may be 3 to 8 wt%, 4 to 7 wt%, or 5 to 6 wt%.

Within the above range, the content of phosphorus and fluorine atoms included in the electrolyte may be appropriately adjusted, thereby further improving the combustion-blocking ability, SEI-forming ability, and dendrite suppression ability. Accordingly, the flame retardancy, cycle life, and capacity retention rate of the lithium secondary battery may be further enhanced.

In some embodiments, the electrolyte may have a fluorine content of 30 wt% or more and a phosphorus content of 1.8 wt% or more. For example, the fluorine content may be 30 to 40 wt%, 32 to 38 wt%, or 34 to 37 wt%. The phosphorus content may be 1.8 to 6.0 wt%, 2.8 to 4.0 wt% or 3.3 to 3.8 wt%.

Within the above range, the electrolyte may further sufficiently suppress the formation of SEI layer and dendrites while exhibiting higher combustion-blocking ability. Accordingly, the flame retardancy, cycle life, and capacity retention rate of the lithium secondary battery may be further improved.

In some embodiments, the electrolyte may have an oxygen content of 32.5 wt% or less. For example, the oxygen content may be 26 to 32.5 wt%, 27 to 31 wt%, or 28 to 29 wt%. Within the above range, the flame retardancy, cycle life, and capacity retention rate of the lithium secondary battery may be further improved.

For example, the content of each element constituting the electrolyte, such as fluorine, phosphorus, oxygen, carbon, hydrogen and nitrogen, may be comprehensively measured using an Elemental Analyzer (EA), Inductively Coupled Plasma-Optical Emission Spectroscopy (ICP-OES), Ion Chromatography (IC), and Nuclear Magnetic Resonance (NMR).

In some embodiments, the electrolyte may be a non-aqueous electrolyte that does not include water.

### <Lithium secondary battery>

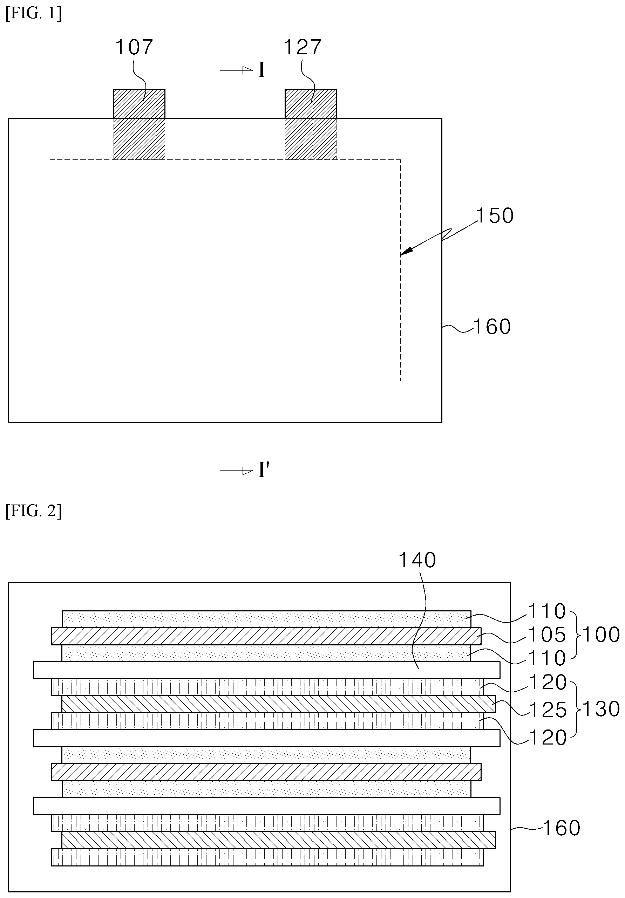

FIGS. 1 and 2 are a plan view and a cross-sectional view schematically illustrating a lithium secondary battery according to exemplary embodiments, respectively.

Referring to FIGS. 1 and 2, the lithium secondary battery may include an electrode assembly 150 including a cathode 100 and an anode 130. The electrode assembly 150 may be housed in a case 160 together with the above-described electrolyte according to the exemplary embodiments to be impregnated. The electrode assembly 150 may further include a separation membrane 140 interposed between the cathode 100 and the anode 130.

The cathode 100 may include a cathode active material layer 110 formed by applying a cathode active material to a cathode current collector 105. The cathode active material may include a compound capable of reversibly intercalating and deintercalating lithium ions.

In some embodiments, the cathode active material may be a secondary particle formed by assembling or aggregating a plurality of primary particles into substantially one particle, or may be in the form of a single particle. The single particle form may refer to, for example, excluding a secondary particle formed by assembling or aggregating a plurality of (e.g., greater than 10) primary particles into substantially one particle. However, the single particle form does not exclude a monolithic body form formed by attaching or closely contacting single particles in a range of 2 to 10 (e.g., a structure converted into a single particle). In some embodiments, the cathode active material may include both the secondary particle form and the single particle form.

In exemplary embodiments, the cathode active material may include a lithium-transition metal oxide. For example, the cathode active material may include a lithium-transition metal oxide such as a lithium cobalt oxide (LiCoO₂), lithium manganese oxide (LiMn₂O₄), lithium nickel oxide (LiNiO₂), and lithium iron phosphate (LFP)-based cathode active materials, etc., or a lithium-transition metal composite oxide in which some of these transition metals are substituted by another transition metal.

For example, the lithium-transition metal oxide may include nickel (Ni), and may further include at least one selected from the group consisting of cobalt (Co) and manganese (Mn). For example, the cathode active material may include an NCM-based cathode active material; Mn-rich-based cathode active material; or Li-rich layered oxide (LLO), over-lithiated oxide (OLO) or over-lithiated layered oxide (OLLO)-based cathode active material.

For example, the lithium-transition metal oxide may have a structure represented by Formulas 6-1 to 6-3 below.

[Formula 6-1] LiₐNi_{b}M_{1-b}O₂

In Formula 6-1 above, a and b may satisfy 0.9≤a≤1.2, b≥0.5, and M may be at least one of Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba and Zr. Specifically, in Formula 6-1 above, a may be in a range of 0.95≤a≤1.08, and b may be 0.6 or more, 0.8 or more, greater than 0.8, 0.9 or more, or 0.98 or more. Specifically, in Formula 6-1 above, M may include Co, Mn or Al, and more specifically, M may include Co and Mn and optionally further include Al.

[Formula 6-2] pLi₂MnO₃·(1-p)LiqJO₂

In Formula 6-2 above, p and q may satisfy 0<p<1, 0.9≤q≤1.2, and J may be one or more elements selected from the group consisting of Mn, Ni, Co, Fe, Cr, V, Cu, Zn, Ti, Al, Mg and B.

[Formula 6-3] Li₁₊ₓMi₋ₓO₂

In Formula 6-3 above, x may be in a range of 0≤x≤0.4, and M may be at least one of Na, Mg, Ca, Y, Ti, Zr, Hf, V, Nb, Ta, Cr, Mo, W, Ni, Mn, Co, Fe, Cu, Ag, Zn, B, Al, Ga, C, Si, Sn, Ba and Zr. Specifically, in Formula 6-3 above, M may include Ni, Co, Mn or Al, and more specifically, M may include Ni, Co and Mn, and optionally further include Al.

In addition, the cathode active material may be a lithium iron phosphate (LFP)-based cathode active material represented by a formula of LiFePO₄.

A slurry may be prepared by mixing and stirring the cathode active material with a binder, a conductive material and/or a dispersant in a solvent. The slurry may be applied to the cathode current collector 105, followed by compression and drying to prepare the cathode 100.

The cathode current collector 105 may include, for example, stainless steel, nickel, aluminum, titanium, copper, or an alloy thereof, or may include aluminum or an aluminum alloy.

The binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC). For example, a PPC-LiTFSI-based binder may be used as a cathode binder.

The conductive material may be included to facilitate the migration of electrons between active material particles. For example, the conductive material may include carbon-based conductive materials such as graphite, carbon black, graphene, or carbon nanotubes and/or metal-based conductive materials, including perovskite materials, such as tin, tin oxide, titanium oxide, LaSrCoO₃, and LaSrMnO₃.

The anode 130 may include an anode current collector 125 and an anode active material layer 120 formed by coating the anode current collector 125 with an anode active material.

The anode current collector 125 may include, for example, gold, stainless steel, nickel, aluminum, titanium, copper, or an alloy thereof, and may include, for example, copper or a copper alloy.

In some embodiments, as the anode active material, a carbon-based compound such as artificial graphite, natural graphite, or amorphous carbon or a silicon (Si)-based compound may be used. For example, as the anode active material, silicon-carbon particles including pure Si, silicon oxide (SiOx; 0<x<2), silicon carbide (SiC), or a carbon core and a silicon coating layer may be used.

In some embodiments, the anode 130 may include metallic lithium. For example, as the anode active material, metallic lithium or a lithium-metal alloy may be used, and the anode active material layer 120 may include a lithium metal foil disposed on the anode current collector 125.

In some embodiments, a slurry may be prepared by mixing and stirring the anode active material with a binder, a conductive material and/or a dispersant in a solvent. The slurry may be applied to the anode current collector 125, followed by compression and drying to prepare the anode 130. As the conductive material, materials substantially the same as or similar to the above-described materials may be used.

In exemplary embodiments, a binder for an anode may include: an organic binder such as vinylidene fluoride-hexafluoropropylene copolymer (PVDF-HFP), polyvinylidene fluoride (PVDF), polyacrylonitrile, polymethyl methacrylate, PPC-LiTFSI, etc.; or an aqueous binder such as SBR, etc., and may be used together with a thickener such as CMC.

Meanwhile, the lithium secondary battery may be an anodeless secondary battery. That is, the lithium secondary battery may be a battery in which the anode active material layer 120 is not formed on the anode current collector 125 during a process of assembling the battery. When the anodeless lithium secondary battery is initially charged or first charged, a main cathode active material and a sacrificial cathode active material may be delithiated, and lithium ions generated from the cathode active material may be reduced on the anode current collector 125 to form a lithium layer of a lithium metal layer or a solid lithium layer.

A separation membrane 140 may be interposed between the cathode 100 and the anode 130. The separation membrane 140 may include a porous polymer film made of a polyolefin-based polymer such as ethylene homopolymer, propylene homopolymer, ethylene/butene copolymer, ethylene/hexene copolymer, ethylene/methacrylate copolymer or the like. The separation membrane may include a nonwoven fabric made of glass fibers having a high melting point, polyethylene terephthalate fibers, etc.

In some embodiments, the anode 130 may have an area (e.g., a contact area with the separation membrane 140) and/or volume larger than those/that of the cathode 100. Thereby, lithium ions generated from the cathode 100 may smoothly migrate to the anode 130 without being precipitated during the process, for example.

According to exemplary embodiments, an electrode cell is defined by the cathode 100, the anode 130 and the separation membrane 140, and a plurality of electrode cells are stacked to form, for example, a jelly roll-type electrode assembly 150. For example, the electrode assembly 150 may be formed by winding, laminating, folding, and the like the separation membrane 140.

The electrode assembly 150 may be housed in a case 160 together with the electrolyte according to exemplary embodiments, such that a lithium secondary battery may be defined.

As shown in FIG. 1, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) that extend or are exposed to the outside of the case 160.

The lithium secondary battery may be manufactured, for example, in a cylindrical shape using a can, a prismatic shape, a pouch shape or a coin shape.

Hereinafter, preferred examples are proposed to facilitate understanding of the present disclosure. However, the following examples are only given for illustrating the present disclosure and those skilled in the art will obviously understand that various alterations and modifications are possible within the scope and spirit of the present disclosure. Such alterations and modifications are duly included in the appended claims.

### Examples and Comparative Examples

### 1. Example 1

### (1) Preparation of electrolyte

Fluorine-based solvents, FEC (manufactured by Tokyo Chemical Industry) and FEMC (manufactured by Synquest Labs), were mixed in a volume ratio of 1:4, and stirred for 12 hours to prepare a mixed solvent. Then, 1 M LiPF₆ and a phosphorus-based flame retardant additive, EPC (ethoxy(pentafluoro)cyclotriphosphazene) (manufactured by Tokyo Chemical Industry), were dissolved in the mixed solvent, and the mixture was stirred for 12 hours to prepare an electrolyte.

The contents of fluorine-based solvent, lithium salt, and EPC based on the total weight of the electrolyte are shown in Table 2 below. The structure of EPC is represented by Formula 5 below.

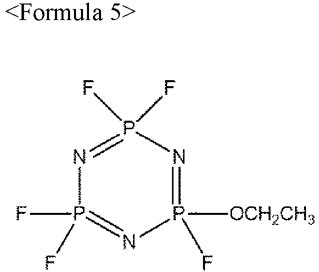

### EPC (ethoxy(pentafluoro)cyclotriphosphazene)

### (2) Manufacture of lithium secondary battery

A slurry was prepared by mixing Li[Ni_{0.6}Co_{0.2}Mn_{0.2}]O₂ as a cathode active material, carbon black as a conductive material, and polyvinylidene fluoride (PVdF) as a binder in a weight ratio of 92:5:3. The slurry was uniformly applied to an aluminum foil having a thickness of 15 µm and vacuum dried at 130°C. The dried slurry was rolled to manufacture a cathode for a lithium secondary battery with a density of 3.667 g/cm³.

A lithium metal foil (thickness: 20 µm) (manufactured by Honzo) was used as an anode.

An electrode assembly was formed by interposing a separation membrane (polypropylene) between the prepared cathode and anode. The electrode assembly was placed in a case with the electrolyte prepared in (1) above, and vacuum-packed to manufacture a lithium secondary battery.

### 2. Example 2

An electrolyte was prepared in the same manner as in Example 1, except that fluorine-based solvents, FEC and FEMC, were mixed in a volume ratio of 0.8:9.2. Thereafter, a lithium secondary battery was manufactured in the same manner as in Example 1, except that the above-prepared electrolyte was used instead of the electrolyte of Example 1.

### 3. Example 3

An electrolyte was prepared in the same manner as in Example 1, except that fluorine-based solvents, FEC and FEMC, were mixed in a volume ratio of 8.2:1.8. Thereafter, a lithium secondary battery was manufactured in the same manner as in Example 1, except that the above-prepared electrolyte was used instead of the electrolyte of Example 1.

### 4. Comparative Example 1

Organic solvents EC (ethylene carbonate) (manufactured by Enchem) and EMC (ethyl methyl carbonate) (manufactured by Enchem) were mixed in a volume ratio of 3:7, respectively, and stirred for 12 hours to prepare a mixed solvent. Then, 1M LiPF6 was dissolved in the mixed solvent, and FEC was added, then the mixture was stirred for 12 hours to prepare an electrolyte. Thereafter, a lithium secondary battery was manufactured in the same manner as in Example 1, except that the above-prepared electrolyte was used instead of the electrolyte of Example 1.

### 5. Comparative Example 2

An electrolyte was prepared in the same manner as in Example 1, except that the phosphorus-based flame retardant additive, EPC, was not used. Thereafter, a lithium secondary battery was manufactured in the same manner as in Example 1, except that the above-prepared electrolyte was used instead of the electrolyte of Example 1.

### 6. Comparative Example 3

An electrolyte was prepared in the same manner as in Example 1, except that FEC, FEMC, EC, and EMC were mixed in a volume ratio of 0.8:3.2:1.2:4.8. Thereafter, a lithium secondary battery was manufactured in the same manner as in Example 1, except that the above-prepared electrolyte was used instead of the electrolyte of Example 1.

### 7. Comparative Example 4

An electrolyte was prepared in the same manner as in Example 1, except that the contents of the fluorine-based solvent, lithium salt, and EPC based on the total weight of the electrolyte were changed as described in Table 2 below (by using an excessive amount of EPC). Thereafter, a lithium secondary battery was manufactured in the same manner as in Example 1, except that the above-prepared electrolyte was used instead of the electrolyte of Example 1.

In the examples and comparative examples, the content (vol%) of the fluorine-based solvent based on the total volume of the solvent and the volume ratios (v/v) of the solvents are described in Table 1 below, the contents (wt%) of the solvent, lithium salt, and phosphorus-based flame retardant additive based on the total weight of the electrolyte are described in Table 2 below, and the contents of fluorine, phosphorus, oxygen, carbon, hydrogen, and nitrogen included in the electrolyte are described in Table 3 below.

**[TABLE 1]**

| | Content of fluorine-based solvent (vol%) | Volume ratio of solvents (v/v) |
|---|---|---|
| Example 1 | 100 vol% | FEC:FEMC=1:4 |
| Example 2 | 100 vol% | FEC:FEMC=0.8:9.2 |
| Example 3 | 100 vol% | FEC:FEMC=8.2:1.8 |
| Comparative Example 1 | 0 vol% | EC:EMC=3:7 |
| Comparative Example 2 | 100 vol% | FEC:FEMC=1:4 |
| Comparative Example 3 | 40 vol% | FEC:FEMC:EC:EMC=0.8:3.2:1.2:4.8 |
| Comparative Example 4 | 100 vol% | FEC:FEMC=1:4 |

**[TABLE 2]**

| | Lithium salt | Solvent | Phosphorus-based flame retardant additive |
|---|---|---|---|
| Example 1 | LiPF₆ (10.5 wt%) | FEC (18.0 wt%) and FEMC (66.5 wt%) | EPC (5 wt%) |
| Example 2 | LiPF₆ (10.6 wt%) | FEC (9.0 wt%) and FEMC (75.4 wt%) | EPC (5 wt%) |
| Example 3 | LiPF₆ (10.0 wt%) | FEC (69.1 wt%) and FEMC (15.9 wt%) | EPC (5 wt%) |
| Comparative Example 1 | LiPF₆ (13.0 wt%) | EC (30.5 wt%), EMC (54.5 wt%), and FEC (2 wt%) | - |
| Comparative Example 2 | LiPF₆ (11.0 wt%) | FEC (19.0 wt%) and FEMC (70.0 wt%) | - |
| Comparative Example 3 | LiPF₆ (11.9 wt%) | FEC (8.0 wt%), FEMC (30.0 wt%) EC (11.1 wt%), and EMC (34.0 wt%), | EPC (5 wt%) |
| Comparative Example 4 | LiPF₆ (10.0 wt%) | FEC (16.0 wt%) and FEMC (63.0 wt%) | EPC (11 wt%) |

**[TABLE 3]**

| | Fluorine content (wt%) | Phosphorus content (wt%) | Oxygen content (wt%) | Carbon content (wt%) | Hydrogen content (wt%) | Nitrogen content (wt%) |
|---|---|---|---|---|---|---|
| Example 1 | 37.0 | 3.8 | 28.8 | 26.9 | 2.7 | 0.8 |
| Example 2 | 38.7 | 3.9 | 27.3 | 26.5 | 2.8 | 0.8 |
| Example 3 | 27.5 | 3.7 | 36.5 | 28.9 | 2.6 | 0.8 |
| Comparative Example 1 | 10.2 | 2.7 | 42.9 | 38.5 | 5.7 | 0 |
| Comparative Example 2 | 37.1 | 2.3 | 30.0 | 27.8 | 2.8 | 0 |
| Comparative Example 3 | 22.3 | 3.9 | 35.4 | 33.1 | 4.5 | 0.8 |
| Comparative Example 4 | 37.1 | 5.8 | 27.1 | 25.6 | 2.7 | 1.7 |

### Evaluation

### Evaluation 1: Electrolyte combustion test

After impregnating a glass filter with the electrolytes according to the examples and comparative examples and igniting it with a torch for 2 seconds, flame retardancy was evaluated by confirming combustion patterns.

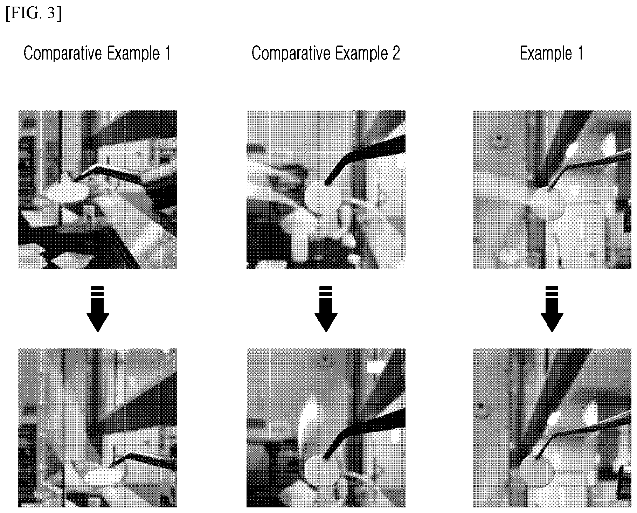

FIG. 3 is photographs illustrating the results of evaluating the flame retardancy of the electrolytes prepared according to Example 1, and Comparative Examples 1 and 2.

Referring to FIG. 3, in Example 1, the flame was extinguished upon removal of the ignition source, whereas in Comparative Example 2, although the flame size was small, combustion was observed for a short period. In addition, the combustion duration of Comparative Example 1 was the longest.

Further, according to Equation 1 below, the combustion time reduction ratio of the examples and comparative examples relative to the combustion time of Comparative Example 1 was calculated. Combustion time reduction ratio (%) = ((Combustion time of examples or comparative examples) - (Combustion time of Comparative Example 1)) ÷ (Combustion time of Comparative Example 1) × 100

The evaluation results are shown in Table 4 below.

### Evaluation 2: Evaluation of lithium electrodeposition

The lithium secondary batteries according to the examples and comparative examples were charged at a constant current of 0.1 C to 4.3 V at room temperature (25°C), and then charged at a constant voltage until the current reached 0.01 C while maintaining 4.3 V. Thereafter, the shape of the lithium electrodeposited on the surface of the copper foil was evaluated using a scanning electron microscope (SEM).

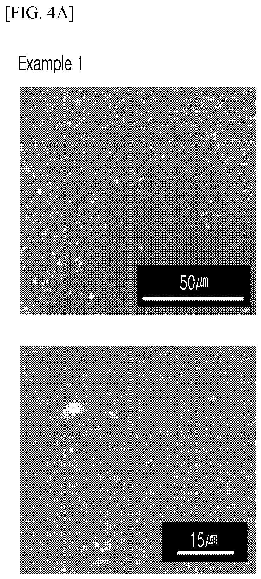

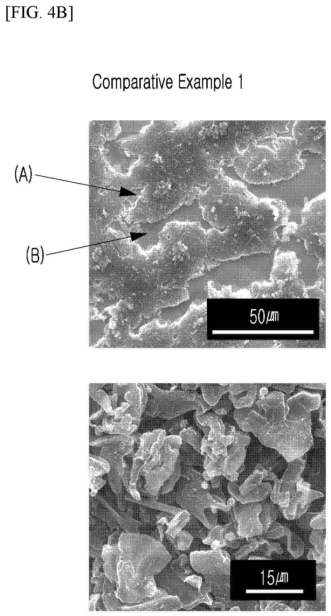

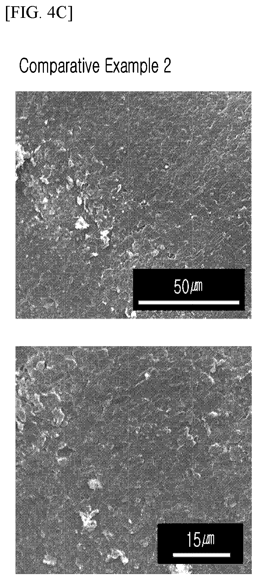

FIGS. 4A, 4B and 4C are photographs illustrating the results of evaluating the electrodeposition shapes of lithium secondary batteries manufactured according to Example 1, and Comparative Examples 1 and 2, respectively, wherein (A) in FIG. 4B illustrates the electrodeposited lithium, and (B) in FIG. 4B illustrates the copper foil.

Referring to FIGS. 4A, 4B and 4C, in Example 1 and Comparative Example 2, lithium was densely deposited on the surface of the copper foil and the formation of dendrites was suppressed, whereas in Comparative Example 1, lithium was unevenly deposited on the surface of the copper foil and the growth of dendrites was not suppressed.

The evaluation results are shown in Table 4 below.

### Evaluation 3: Evaluation of capacity retention rate

The lithium secondary batteries according to the examples and comparative examples were charged at a constant current of 0.5 C to 4.3 V at room temperature (25°C), and then charged at a constant voltage until the current reached 0.05 C while maintaining 4.3 V. Thereafter, the initial discharge capacity was measured by discharging at 0.5 C to 2.7 V.

The charging and discharging were repeated 60 times, and the discharge capacity in each cycle was divided by the initial capacity to calculate the capacity retention rate (%).

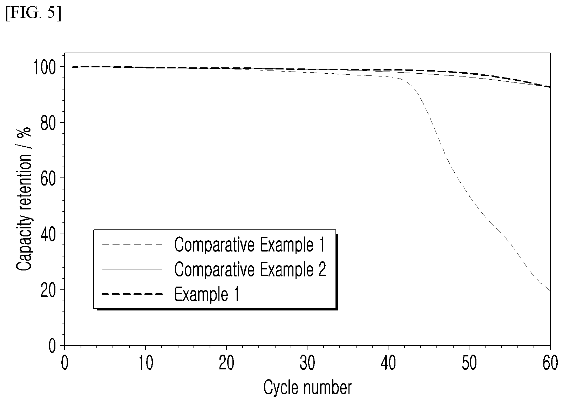

FIG. 5 is a graph illustrating the capacity retention rates according to repeated charging and discharging of the lithium secondary batteries manufactured according to Example 1, and Comparative Examples 1 and 2.

Referring to FIG. 5, when charging and discharging were performed 40 or more times, the capacity retention rate of Comparative Example 1 rapidly decreased compared to Example 1 and Comparative Example 2.

The results of evaluating the capacity retention rate after 60 cycles are shown in Table 4 below.

**[TABLE 4]**

| | Flame retardancy | | Whether dendrite formation is suppressed | Capacity retention ratio (%) (@60 cycles) |
|---|---|---|---|---|
| | Combustion time (s/g) | Combustion time reduction ratio (%) | | |
| Example 1 | 0 | -100 | ○ | 94 |
| Example 2 | 0 | -100 | ○ | 67 |
| Example 3 | 0 | -100 | ○ | 55 |
| Comparative Example 1 | 72.0 | 0 | × | 20 |
| Comparative Example 2 | 20.6 | -71.4 | ○ | 93 |
| Comparative Example 3 | 54.4 | -24.4 | × | 34 |
| Comparative Example 4 | 0 | -100 | ○ | 51 |

Referring to Tables 3 and 4, it can be confirmed that the electrolytes of Examples 1 to 3, which include a fluorine-based solvent having a specific composition and a phosphorus-based flame retardant additive, simultaneously exhibit excellent flame retardancy, dendrite suppression capability, and capacity retention rate compared to the electrolytes of Comparative Examples 1 to 4.

## Claims

1. An electrolyte for a lithium secondary battery comprising:
a solvent comprising a fluorine-based solvent; and
a phosphorus-based flame retardant additive,
wherein the fluorine-based solvent is included in an amount of 50% by volume or more based on the total volume of the solvent, and
wherein the fluorine-based solvent comprises a fluorine-containing cyclic carbonate and a fluorine-containing linear asymmetric carbonate.

2. The electrolyte for a lithium secondary battery according to claim 1, wherein the phosphorus-based flame retardant additive comprises cyclotriphosphazene having a structure represented by Formula 1 below: 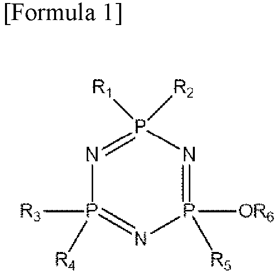 (in Formula 1, R₁ to R₅ are each independently a halogen atom, and R₆ is an alkyl group having 1 to 10 carbon atoms).

3. The electrolyte for a lithium secondary battery according to claim 2, wherein R₁ to R₅ are fluorine atoms, and R₆ is an ethyl group.

4. The electrolyte for a lithium secondary battery according to claim 1, wherein the fluorine-containing linear asymmetric carbonate has a non-polymerizable terminal group.

5. The electrolyte for a lithium secondary battery according to claim 1, wherein the fluorine-containing cyclic carbonate has a structure represented by Formula 2 below: 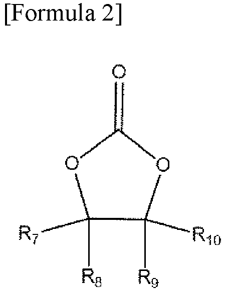 (in Formula 2, R₇ to R₁₀ are each independently a hydrogen atom or a fluorine atom, and at least one of R₇ to R₁₀ is a fluorine atom).

6. The electrolyte for a lithium secondary battery according to claim 1, wherein the fluorine-containing linear asymmetric carbonate has a structure represented by Formula 3 below: 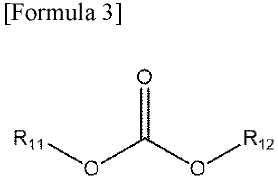 (in Formula 3, R₁₁ is a fluorine-free alkyl group having 1 to 5 carbon atoms, and R₁₂ is an alkyl group having 1 to 5 carbon atoms in which at least one hydrogen atom is replaced with a fluorine atom).

7. The electrolyte for a lithium secondary battery according to claim 1, wherein a content of the fluorine-based solvent is 70% by weight or more based on a total weight of the electrolyte.

8. The electrolyte for a lithium secondary battery according to claim 1, wherein the fluorine-containing cyclic carbonate and the fluorine-containing linear asymmetric carbonate are included in a volume ratio of 1:9 to 8:2.

9. The electrolyte for a lithium secondary battery according to claim 1, further comprising a lithium salt.

10. The electrolyte for a lithium secondary battery according to claim 9, wherein the lithium salt comprises at least one selected from the group consisting of LiPF₆, LiClO₄, LiBF₄, LiFSI, LiTFSI, LiSO₃CF₃, LiBOB, LiFOB, LiDFOB, LiDFBP, LiTFOP, LiPO₂F₂, LiCl, LiBr, LiI, LiB₁₀Cl₁₀, LiCF₃SO₃, LiCF₃CO₂, LiAsF₆, LiSbF₆, LiAlCl₄, CH₃SO₃Li, CF₃SO₃Li, LiSCN and LiC(CF₃SO₂)₃.

11. The electrolyte for a lithium secondary battery according to claim 1, wherein a content of the phosphorus-based flame retardant additive is 3 to 10% by weight based on the total weight of the electrolyte.

12. The electrolyte for a lithium secondary battery according to claim 1, wherein the fluorine content is 30% by weight or more and the phosphorus content is 1.8% by weight or more.

13. The electrolyte for a lithium secondary battery according to claim 1, wherein the oxygen content is 32.5% by weight or less.

14. A lithium secondary battery comprising:
a case;
an electrode assembly comprising a cathode and an anode housed in the case; and
the electrolyte for a lithium secondary battery according to any one of claims 1 to 13 injected into the case.

15. The lithium secondary battery according to claim 14, wherein the anode comprises metal lithium.

16. The lithium secondary battery according to claim 14, wherein the electrode assembly further comprises a separation membrane interposed between the cathode and the anode.
